# EUROPÄISCHE PATENTANMELDUNG

(11) **EP 4 696 529 A1**
(43) Veröffentlichungstag der Anmeldung: **18.02.2026**
(21) Anmeldenummer: 25176240.7
(22) Anmeldetag: 13.05.2025
(51) Int. Cl.: B60G 15/06, B60G 17/027

(54) **SCHWINGUNGSDÄMPFEREINHEIT FÜR MACPHERSON-FAHRWERK**

(30) Priorität: 12.08.2024 DE 102024122929
(71) Anmelder: Vibracoustic SE, 69469 Weinheim (DE)
(72) Erfinder: Altinoluk, Ersan, Hamburg (DE); Bulling, Dieter, Wedemark (DE)
(74) Vertreter: Patentanwälte Olbricht Buchhold Keulertz

(57) **Zusammenfassung**

Die Erfindung betrifft eine Schwingungsdämpfereinheit (10), durch die sich eine Längsachse (LA) erstreckt. Die Schwingungsdämpfereinheit umfasst einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt. Erfindungsgemäßumfasst der zweite Verstellpartner (28) zwischen der zweiten Federanlagefläche (32) und dem Kraftaufnahmeelement (30) ein Überbrückungselement (34) aufweisend eine von der Längsachse (LA) abgewandte Außenfläche (A1), die zumindest bereichsweise einen ersten Abstand (S1) von der Längsachse (LA) hat, der geringer ist als ein zweiter Abstand (S2) zumindest eines Bereiches einer von der Längsachse (LA) abgewandten Außenfläche (A2) des Kraftaufnahmeelementes (30) und/oder des ersten Verstellpartners (26).

## Beschreibung

Die Erfindung betrifft eine Schwingungsdämpfereinheit. Durch die Schwingungsdämpfereinheit erstreckt sich eine Längsachse. Die Schwingungsdämpfereinheit umfasst einen Dämpfer, ein Gegenlager und eine Feder. Das Gegenlager bildet eine erste Federanlagefläche aus, an der die Feder anliegt. Weiterhin umfasst die Schwingungsdämpfereinheit eine Fußpunktverstelleinrichtung, die entlang der Längsachse versetzt zum Gegenlager angeordnet ist. Die Fußpunktverstelleinrichtung weist einen ersten Verstellpartner und einen zweiten Verstellpartner auf. Der zweite Verstellpartner ist entlang der Längsachse zumindest teilweise zwischen dem ersten Verstellpartner und der Feder angeordnet. Der zweite Verstellpartner ist relativ zum ersten Verstellpartner in eine zur Längsachse parallele Verstellrichtung beweglich gelagert. Der zweite Verstellpartner weist ein Kraftaufnahmeelement zur Aufnahme einer Verstellkraft auf und bildet eine zweite Federanlagefläche aus, an der die Feder anliegt.

Eine solche gattungsgemäße Schwingungsdämpfereinheit ist zur Ausbildung eines Fahrwerkes bekannt. Bei der bekannten Schwingungsdämpfereinheit bildet das Kraftaufnahmeelement die zweite Federanlagefläche aus.

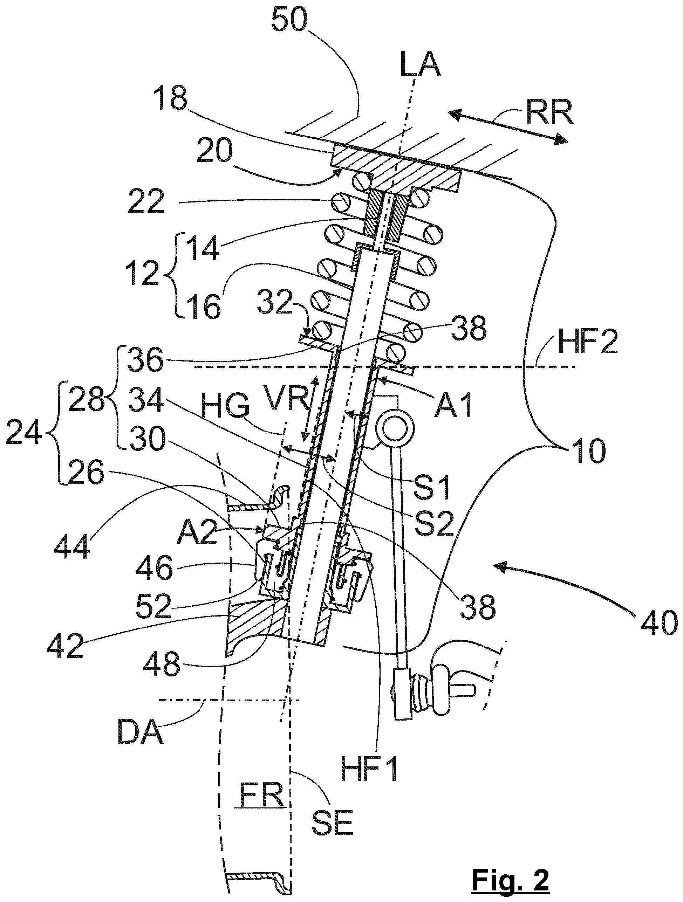

Die DE 10 2014 108 241 B4 veranschaulicht unterschiedliche Typen von Fahrwerken mit Schwingungsdämpfereinheiten, die zwar nicht gattungsgemäß ausgebildet sind, jedoch einen hydraulischen Aktuator zur Höhenverstellung umfassen. Ein erster veranschaulichter Fahrwerkstyp (Fig. 2 und 3) weist neben einer Schwingungsdämpfereinheit charakteristisch sowohl einen unteren Lenker als auch einen oberen Lenker zwischen einem Radträger, an dem ein Rad gelagert ist, und einer Fahrzeugkarosserie auf. Durch die beiden Lenker ist eine Höhenführung des Radträgers vollständig bestimmt. Die Schwingungsdämpfereinheit muss daher nur die Funktionen des Federns und des Dämpfens übernehmen. Dies erlaubt eine relativ freie Positionierung sowohl der Schwingungsdämpfereinheit, beispielsweise zwischen der Fahrzeugkarosserie und dem unteren Lenker, als auch des Aktuators, beispielsweise am unteren Fußpunkt des Dämpfers. Der Aktuator bildet beim ersten Fahrwerkstyp im Gegensatz zur gattungsgemäßen Schwingungsdämpfereinheit keine Federanlagefläche aus. Ein zweiter von der DE 10 2014 108 241 B4 veranschaulichter Fahrwerkstyp (Fig. 4) weist keinen oberen Lenker auf. Stattdessen übernimmt die Schwingungsdämpfereinheit hier neben ihren vorgenannten Funktionen auch die Führungsfunktion des oberen Lenkers des ersten Fahrwerkstyps. Dazu ist ein vom Gegenlager abgewandtes Ende des Dämpfers der Schwingungsdämpfereinheit unmittelbar am Radträger angeordnet.

Der zweite Fahrwerkstyp wird als MacPherson-Fahrwerk bezeichnet. In dieser Ausführungsform steht zwischen einem Reifen des Rades und dem Dämpfer kein Bauraum für einen Aktuator zur Verfügung, da der Dämpfer als Teil des Fahrwerks aus kinematischen Gründen nah am Rad angeordnet zu sein hat. Aus diesem Grund wird der Aktuator gemäß dem Stand der Technik am über dem Reifen positionierten Abschnitt des Dämpfers platziert.

Oberhalb des Rades konkurriert der Aktuator mit der Feder um Bauraum. Einen festen Höhenabstand des Gegenlagers vom Rad vorausgesetzt muss die Feder aufgrund der Bauraumkonkurrenz kürzer ausgebildet sein, als sie bei Abwesenheit des Aktuators zur Erreichung bestmöglicher Fahreigenschaften des mit der Schwingungsdämpfereinheit auszustattenden Fahrzeuges ausgebildet wäre. Das ist auch bei der bekannten gattungsgemäßen Schwingungsdämpfereinheit der Fall. Die mit dem Aktuator einhergehende Verkürzung der Feder führt zu nachteiligen Fahrkomforteigenschaften.

Der Erfindung liegt erstens die Aufgabe zugrunde, eine gattungsgemäße Schwingungsdämpfereinheit bereitzustellen, durch die der vorbeschriebene Nachteil zu vermeiden ist. Der Erfindung liegt zweitens die Aufgabe zugrunde, eine möglichst einfach und platzsparend aufgebaute Fahrwerkseinrichtung bereitzustellen, durch die der vorbeschriebene Nachteil zu vermeiden ist.

Erstens wird die Aufgabe durch die nachfolgend beschriebene Schwingungsdämpfereinheit gelöst. Erfindungsgemäß umfasst der zweite Verstellpartner zwischen der zweiten Federanlagefläche und dem Kraftaufnahmeelement ein Überbrückungselement. Das Überbrückungselement weist eine von der Längsachse abgewandte Außenfläche auf, die zumindest bereichsweise einen ersten Abstand von der Längsachse hat, der geringer ist als ein zweiter Abstand zumindest eines Bereiches einer von der Längsachse abgewandten Außenfläche des Kraftaufnahmeelementes und/oder des ersten Verstellpartners von der Längsachse.

Der erste Abstand und der zweite Abstand sind mit Bezug auf die Längsachse insbesondere in die gleiche radiale Richtung zu messen. Durch das Überbrückungselement wird zwischen der Feder und dem ersten Verstellpartner insbesondere ein so schlanker und nur wenig auf dem Dämpfer auftragender Abschnitt der Schwingungsdämpfereinheit geschaffen, dass das Überbrückungselement, ohne Bauraumprobleme zu verursachen, unmittelbar neben dem Rad anzuordnen ist. Das unterscheidet das Überbrückungselement insbesondere von der Feder und dem Kraftaufnahmeelement und/oder dem ersten Verstellpartner.

Das Überbrückungselement ermöglicht in der beschriebenen Einbausituation eine Übertragung der Wirkung der Fußpunktverstelleinrichtung an dem Rad entlang. Durch das Überbrückungselement lässt sich die Fußpunktverstelleinrichtung zumindest teilweise weiter vom Gegenlager beabstanden als bisher. Bevorzugt lässt sich das Kraftaufnahmeelement von der Feder beabstanden. Insbesondere ist ein Abstand der Fußpunktverstelleinrichtung von einer Drehachse des Rades derart weit verkleinern, dass die Fußpunktverstelleinrichtung der Drehachse näher ist als ein Felgenring des Rades. Es lässt sich insbesondere ein Aufbau erreichen, bei dem ein dem Dämpfer nächstkommender Teil des Rades, insbesondere das Felgenhorn, in axialer Richtung zwischen dem Kraftaufnahmeelement und der zweiten Anlagefläche angeordnet ist. Dadurch ist die Bauraumkonkurrenz zwischen der Fußpunktverstelleinrichtung und der Feder aufzulösen und Platz für eine Verlängerung der Feder geschaffen. Somit können in Hinblick auf die Federlänge optimale Federeigenschaften erreicht werden, ohne auf die Fußpunktverstelleinrichtung verzichten zu müssen.

Das Gegenlager der Schwingungsdämpfereinheit ist zu einer ortsfesten Montage an einer Fahrzeugstruktur, insbesondere Karosserie, des Fahrzeuges vorgesehen. Die Schwingungsdämpfereinheit ist bevorzugt derart ausgebildet, dass der Radträger gegenüber der Fahrzeugstruktur drehbeweglich entkoppelt ist. Insbesondere kann die erste Federanlagefläche derart ausgebildet sein, dass sie im Einsatz der Schwingungsdämpfereinheit die Feder drehbeweglich von der Fahrzeugstruktur entkoppelt. Zudem kann das Gegenlager noch elastische Entkopplungselemente und/oder weitere Komponenten enthalten, auf die hier nicht näher eingegangen wird, da sie nicht erfindungswesentlich sind. Ergänzend oder alternativ ist es möglich, dass die Feder drehbeweglich an der zweiten Federanlagefläche gelagert ist und/oder der erste Verstellpartner drehbeweglich gegenüber dem Radträger gelagert ist und/oder eine Torsionsentkopplung innerhalb der Fußpunktverstelleinrichtung vorgesehen ist. Die Feder liegt mit ihrem oberen Ende an der ersten Federanlagefläche und mit ihrem unteren Ende an der zweiten Federanlagefläche an. Die Feder ist insbesondere als Spiralfeder ausgebildet und umgibt den Dämpfer zwischen den genannten Federanlageflächen.

Die Schwingungsdämpfereinheit ist insbesondere als Federbein ausgebildet. Bevorzugt ist die Schwingungsdämpfereinheit als MacPherson-Federbein ausgebildet, das charakteristisch über die reine Feder- und Dämpferwirkung hinaus zur Aufnahme von im Betrieb durch das Rad auf die Schwingungsdämpfereinheit übertragenen Kräften ausgebildet ist. Die Feder erstreckt sich dabei insbesondere spiralförmig um eine Federlängsachse, die angewinkelt zur vorbeschriebenen Längsachse der Schwingungsdämpfereinheit und insbesondere des Dämpfers ausgerichtet ist. Durch die Anwinklung der Federlängsachse zur Längsachse ist die Feder optimal zur Aufnahme der genannten Kräfte ausgebildet.

Der Dämpfer umfasst insbesondere eine Dämpferstange und ein Dämpferrohr, die relativ zueinander bevorzugt in die Verstellrichtung beweglich sind. Die Dämpferstange ist bevorzugt am Gegenlager angeordnet. Das Dämpferrohr ist im Einsatz bevorzugt an dem Radträger anzuordnen. Insbesondere umfasst der Dämpfer einen auf einem dem Gegenlager zugewandten Ende des Dämpferrohrs aufgesetzten Deckel. Bevorzugt ist zumindest ein Teil der Dämpferstange umgeben von einer insbesondere an dem Gegenlager anliegenden Zusatzfeder.

Bei der Fußpunktverstelleinrichtung handelt es sich insbesondere um einen Aktuator. Bei dem ersten Verstellpartner handelt es sich bevorzugt um eine erste Aktuatorhälfte; bei dem zweiten Verstellpartner handelt es sich bevorzugt um eine zweite Aktuatorhälfte.

Die Verstellpartner sind ein- oder mehrstückig und starr ausgebildet. Bevorzugt umgeben die Verstellpartner die Längsachse vollständig. Besonders bevorzugt sind die Verstellpartner zumindest im Wesentlichen achsensymmetrisch ausgebildet. Der erste Verstellpartner ist insbesondere ortsfest am Dämpferrohr angeordnet und zum Anliegen am Radträger vorgesehen. Der zweite Verstellpartner ist bevorzugt unmittelbar am ersten Verstellpartner gelagert. Der zweite Verstellpartner ist relativ zum ersten Verstellpartner von einer Annäherungsstellung in eine Abstandsstellung in die Verstellrichtung und zurück verschieblich ausgebildet.

Die Fußpunktverstelleinrichtung ist bevorzugt hydraulisch zu betreiben. Alternativ zur Ausbildung der Fußpunktverstelleinrichtung zum hydraulischen Betrieb kann die Fußpunktverstelleinrichtung beispielsweise zu einem pneumatischen Betrieb ausgebildet sein. Insbesondere für einen dieser Fälle bildet die Fußpunktverstelleinrichtung bevorzugt einen größenvariablen Fluidraum aus. Der Fluidraum ist besonders bevorzugt zwischen dem ersten Verstellpartner und dem zweiten Verstellpartner angeordnet, besonders bevorzugt auf die Verstellpartner aufgespannt. Zur Bewegung des zweiten Verstellpartners relativ zum ersten Verstellpartner ist ein Fluid in den Fluidraum oder aus dem Fluidraum zu fördern. Bei dem Fluid hat es sich bevorzugt um ein Gas oder um eine inkompressible Flüssigkeit, insbesondere Hydrauliköl. Zur Ausbildung des Fluidraums weist die Fußpunktverstelleinrichtung vorzugsweise zumindest einen Rollbalg auf. Der Rollbalg erstreckt sich vorzugsweise vom ersten Verstellpartner zum zweiten Verstellpartner. Der Rollbalg ist insbesondere aus einem Elastomer ausgebildet und/oder umgibt die Längsachse insbesondere vollständig. Bevorzugt grenzt der Rollbalg an eine von der Längsachse abgewandte Außenfläche des ersten Verstellpartner und/oder eine von der Längsachse abgewandte Außenfläche des zweiten Verstellpartners. Der Rollbalg bildet insbesondere zumindest eine Rollfalte aus, um sich zur Vergrößerung des Fluidraumes abrollen und zur Verkleinerung des Fluidraumes einrollen zu können. Bei Verwendung einer wie vorbeschriebenen ausgebildeten Fußpunktverstelleinrichtung, die gegenüber abweichenden Fußpunktverstelleinrichtungen charakteristische Vorteile und einen erheblichen Raumbedarf hat, kommen die zuvor beschriebenen Vorteile besonders umfangreich zur Geltung.

Das Kraftaufnahmeelement des zweiten Verstellpartners bildet insbesondere ein dem ersten Verstellpartner zugewandtes Ende des zweiten Verstellpartners aus. Bevorzugt grenzt das Kraftaufnahmeelement unmittelbar an den ersten Verstellpartner und/oder an den Fluidraum an und ist zur Aufnahme der von außen auf den zweiten Verstellpartner wirkenden Kraft zu seiner Bewegung relativ zum ersten Verstellpartner ausgebildet. Das Kraftaufnahmeelement steht bevorzugt, insbesondere in Bezug auf das Überbrückungselement, radial von der Längsachse ab. Besonders bevorzugt erstreckt sich das Kraftaufnahmeelement kragen- oder flanschförmig um den Dämpfer.

Eine erste Hilfsfläche, die die Längsachse in einheitlichem Abstand umgibt und innerhalb derer das Überbrückungselement angeordnet ist, schneidet bevorzugt das Kraftaufnahmeelement und/oder den ersten Verstellpartner. Die erste Hilfsfläche ist insbesondere eine endlose zylindermantelförmige Fläche. Die erste Hilfsfläche schneidet das Überbrückungselement nicht, berührt es jedoch optional. Der Radius der Hilfsfläche entspricht insbesondere dem genannten ersten Abstand. Das Kraftaufnahmeelement und/oder der erste Verstellpartner wird besonders bevorzugt entlang einer die Längsachse vollständig umgebenden Schnittfläche von der ersten Hilfsfläche geschnitten. Durch diese bevorzugte Ausgestaltung ist eine vollumfänglich schlanke Form des Überbrückungselementes erreicht, das damit bevorzugt einen kleineren Durchmesser als das Kraftaufnahmeelement hat.

Eine in die Verstellrichtung gemessene Länge des Überbrückungselementes ist bevorzugt größer als der zweite Abstand, besonders bevorzugt größer als ein Zweifaches des zweiten Abstandes, insbesondere größer als ein Dreifaches des zweiten Abstandes. Bei dem zweiten Abstand handelt es sich um den Abstand zumindest des genannten Bereiches der Außenfläche des Kraftaufnahmeelementes und/oder des ersten Verstellpartners von der Längsachse. Die Länge ist bevorzugt zumindest in einer der genannten Stellungen größer als die Hälfte der Länge des zweiten Verstellelementes oder gar der gesamten Fußpunktverstelleinrichtung. Als Länge des Überbrückungselementes wird insbesondere ein Abstand zwischen dem Kraftaufnahmeelement und der zweiten Federanlagefläche beziehungsweise einem die zweite Federanlagefläche ausbildenden Bauteil angesehen. Bei einem Einsatz einer Fußpunktverstelleinrichtung typischen Ausmaßes, insbesondere mit einem Fluidraum typischen Ausmaßes, ist durch die Länge des Überbrückungselementes sichergestellt, dass es sich am gesamten Reifen entlang erstreckt und Bewegungsfreiheit in die Verstellrichtung gewährt. Die zweite Federanlagefläche ist insbesondere derart durch den zweiten Verstellpartner ausgebildet, dass sie beweglich relativ zum Dämpfer, insbesondere zum von der zweiten Federanlagefläche umschlossenen Dämpferbestandteil, bevorzugt zum Dämpferrohr, angeordnet ist. Der erste Verstellpartner ist relativ zum Dämpfer bzw. zum Dämpferbestandteil bevorzugt ortsfest angeordnet.

Das Überbrückungselement ist bevorzugt rohrförmig ausgebildet. Das bedeutet, dass das Überbrückungselement als länglicher Hohlkörper ausgebildet ist. Dadurch ist eine strukturelle Stabilität des Überbrückungselementes geschaffen, die auch bei einer großen Länge noch einen durchgängig geringen ersten Abstand der Außenfläche des Überbrückungselementes von der Längsachse ermöglicht. Im Sinne der Stabilität ist das Überbrückungselement bevorzugt einteilig mit dem Kraftaufnahmeelement ausgebildet oder damit verschweißt. Es kann aber auch form- und/oder kraftschlüssig mit dem Kraftaufnahmeelement verbunden, beispielsweise damit verschraubt oder verklebt sein.

Vorzugsweise ist das Überbrückungselement derartig ausgebildet, dass der erste Abstand höchsten 70 %, bevorzugt höchstens 50 % des zweiten Abstandes entspricht. Dadurch wird einerseits ein Fluidraum ausreichender Größe ermöglicht und andererseits ausreichend Platz auch für breitere Reifen neben dem Überbrückungselement geschaffen.

Der zweite Verstellpartner weist bevorzugt ein Federanlageelement auf, das die zweite Federanlagefläche ausbildet. Das Federanlageelement ist dabei zwischen dem Überbrückungselement und der Feder angeordnet und steht, insbesondere ähnlich dem Kraftaufnahmeelement, radial vom Überbrückungselement ab. Insbesondere ist das Federanlageelement kragenförmig und/oder ringförmig ausgebildet. Besonders bevorzugt handelt es sich bei dem Federanlageelement um einen Federteller. Vorzugsweise ist das Federanlageelement wie auch das Kraftaufnahmeelement von der ersten Hilfsfläche geschnitten und mit dem Überbrückungselement verschweißt. Durch das Federanlageelement ist eine zweite Federanlagefläche konventionellen Ausmaßes auch bei einem besonders schlanken Überbrückungselement noch ermöglicht.

Zwischen dem zweiten Verstellpartner und dem Dämpfer sind zumindest zwei in die Verstellrichtung zueinander versetzt positionierte Axialführungsringe angeordnet. Dabei handelt es sich insbesondere um bevorzugt aus einem Kunststoff ausgebildete Gleitelemente oder Gleitbuchsen. Besonders bevorzugt ist ein erster Axialführungsring im Bereich des Kraftaufnahmeelementes und ein zweiter Axialführungsring im Bereich des Federanlageelementes angeordnet. Durch die Nutzung einer Mehrzahl von Axialführungsringen wird ein Verkippen des zweiten Verstellpartners verhindert und damit seine zuverlässige Verschieblichkeit auch bei einer besonders großen Länge des zweiten Verstellpartners sichergestellt, ohne dass es zu direktem Reibkontakt und damit zu Verschleiß und/oder Geräuschen zwischen dem Dämpfer und dem Verstellpartner kommt.

Besonders bevorzugt ist zumindest einer der Axialführungsringe zwischen dem ersten Verstellpartner und dem zweiten Verstellpartner angeordnet. Der zweite Verstellpartner ist in diesem Fall unmittelbar am ersten Verstellpartner gelagert. Dabei handelt es sich insbesondere um den am weitesten von der Feder entfernten Axialführungsring. In einer alternativen Ausgestaltung der Erfindung ist dieser Axialführungsring unmittelbar zwischen dem zweiten Verstellpartner und dem Dämpfer und dabei insbesondere versetzt zum ersten Verstellelement angeordnet.

Zweitens wird die Aufgabe durch die nachfolgend beschriebene Fahrwerkseinrichtung gelöst. Die Fahrwerkseinrichtung weist den Radträger, eine Radnabe, die um eine Drehachse drehbar am Radträger gelagert ist, und das an der Radnabe angeordnete Rad auf. Das Rad umfasst eine Radfelge mit dem sich rotationssymmetrisch um die Drehachse erstreckenden Felgenring. Die Fahrwerkseinrichtung umfasst außerdem eine gattungsgemäße Schwingungsdämpfereinheit. Die Schwingungsdämpfereinheit der erfindungsgemäßen Fahrwerkseinrichtung ist bevorzugt, jedoch nicht notwendigerweise gemäß der vorstehend als erfindungsgemäß beschriebenen Schwingungsdämpfereinheit ausgebildet. Alternativ handelt es sich zumindest um eine gattungsgemäße Schwingungsdämpfereinheit. Ein vom Gegenlager abgewandtes Ende des Dämpfers ist am Radträger angeordnet.

Die Fußpunktverstelleinrichtung der Schwingungsdämpfereinheit ist bei der erfindungsgemäßen Fahrwerkseinrichtung zumindest teilweise innerhalb eines Felgeninnenraumes angeordnet. Der Felgeninnenraum erstreckt sich innerhalb des Felgenringes und angrenzend an eine Felgenseitenebene. Die Felgenseitenebene erstreckt sich rechtwinklig zur Drehachse und berührt den Felgenring seitlich.

Durch die erfindungsgemäße Fahrwerkseinrichtung wird der Fußpunktverstelleinrichtung ein bisher nicht hierfür genutzter Raum gegeben. Dies erlaubt einen abgewandelten Aufbau der Fußpunktverstelleinrichtung. Vorzugsweise sind die Verstellpartner und insbesondere der Fluidraum bei Erhalt seines Volumens mit Bezug auf die Längsachse länglich von der Feder bis in den Felgeninnenraum auszubilden. Insbesondere ist die Fußpunktverstelleinrichtung mit dem Überbrückungselement auszubilden, mit dem sich der zweite Verstellpartner bevorzugt an dem Felgenring entlangerstreckt. Dadurch ist die beschriebene Bauraumkonkurrenz zwischen der Fußpunktverstelleinrichtung und der Feder zumindest teilweise aufzulösen. Die Feder kann verlängert werden. Dadurch können bessere Federeigenschaften realisiert werden, ohne auf die Vorteile der Fußpunktverstelleinrichtung verzichten zu müssen.

Die Fahrwerkseinrichtung dient insbesondere zur Ausbildung eines MacPherson-Fahrwerks. Der Dämpfer, insbesondere sein Dämpferrohr, ist dazu bevorzugt fest mit dem Radträger verbunden. Der Radträger ist insbesondere derart ausgebildet, dass die Felgenseitenebene ihn schneidet.

Bei dem Einsatz der erfindungsgemäßen Schwingungsdämpfereinheit in der erfindungsgemäßen Fahrwerkseinrichtung reicht das Überbrückungselement bevorzugt näher an die Drehachse heran, als der Felgenring von der Drehachse beabstandet ist. Dadurch ist die Sicherheit gegen eine Kollision des Kraftaufnahmeelementes mit dem Felgenring erhöht. Die Felgenseitenebene schneidet insbesondere den ersten Verstellpartner; bevorzugt schneidet sie sowohl den ersten Verstellpartner als auch den zweiten Verstellpartner. Das gilt zumindest in der maximal eingefahrenen Position, das heißt in der Position, in der das Kraftaufnahmeelement sich maximal dem Radträger in Richtung der Längsachse genähert hat.

Bevorzugt ist die Fußpunktverstelleinrichtung derart teilweise innerhalb des Felgeninnenraumes angeordnet, dass in eine zur Längsachse parallele Hilfsgerade, die das Kraftaufnahmeelement und/oder den ersten Verstellpartner berührt, den Felgenring schneidet. Das Vorstehende gilt in Bezug auf einen Längsschnitt entlang einer Längsebene, in der die Längsachse liegt. Hierdurch ist ein besonders kompakter Aufbau erreicht, bei dem insbesondere ein Felgenhorn des Rades einen kleineren Abstand von der Längsachse haben kann als die Außenfläche des Kraftaufnahmeelementes und/oder des ersten Verstellpartners.

Bevorzugt ist das Federanlageelement derart oberhalb des Rades angeordnet, dass das Federanlageelement zumindest teilweise außerhalb einer zweiten Hilfsfläche angeordnet ist, die die Drehachse in einheitlichem Abstand umgibt. Dabei ist das gesamte Rad innerhalb der zweiten Hilfsfläche angeordnet.

Bei der Längsachse und der Drehachse handelt es sich um gedachte, geometrische Achsen. Bei den genannten Hilfsflächen und der Felgenseitenebene handelt es sich um gedachte, geometrische Flächen. Beim Felgenraum handelt es sich um einen gedachten, geometrischen Raum, dessen Grenzen nicht körperlich sein müssen.

Weitere Einzelheiten und Vorteile der Erfindung lassen sich den nachfolgend beschriebenen, schematisch dargestellten Figuren entnehmen; es zeigen:
- Fig. 1: eine erste erfindungsgemäße Fahrwerkseinrichtung in einer Schnittdarstellung;
- Fig. 2: eine zweite erfindungsgemäße Fahrwerkseinrichtung in einer Schnittdarstellung.

In den Fig. sind gleiche oder einander entsprechende Elemente jeweils mit den gleichen Bezugszeichen bezeichnet und werden daher, sofern nicht zweckmäßig, nicht mehrfach beschrieben. Die in der gesamten Beschreibung enthaltenen Offenbarungen sind sinngemäß auf gleiche Teile mit gleichen Bezugszeichen beziehungsweise gleichen Bauteilbezeichnungen übertragbar. Auch sind die in der Beschreibung gewählten Lageangaben auf die beschriebene Fig. bezogen. Die nachfolgend beschriebenen Merkmale können auch in einer anderen Kombination als unmittelbar beschrieben oder gezeigt Gegenstand der Erfindung sein.

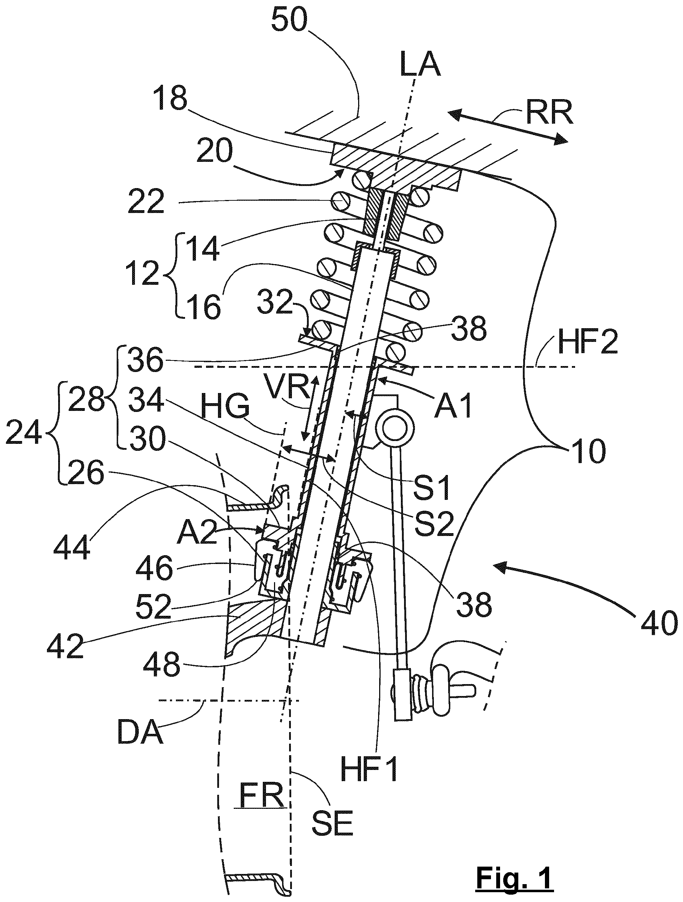

Die Fig. 1 und 2 zeigen zwei erfindungsgemäße Fahrwerkseinrichtungen 40, die einander mit Ausnahme der Anordnung von Axialführungsringen 38 gleichen. Nachfolgend werden zunächst die sowohl von Fig. 1 als auch von Fig. 2 veranschaulichten Merkmale beschrieben.

Ein zentraler Bestandteil der Fahrwerkseinrichtungen 40 ist jeweils eine Schwingungsdämpfereinheit 10. Durch die Schwingungsdämpfereinheit 10 erstreckt sich eine Längsachse LA. Die Schwingungsdämpfereinheit 10 umfasst ein an einer Fahrzeugstruktur 50 angeordnetes Gegenlager 18 und einen Dämpfer 12. Der Dämpfer 12 umfasst eine Dämpferstange 14, die am Gegenlager 18 angeordnet ist, und ein Dämpferrohr 16, das an einem Radträger 42 der Fahrwerkseinrichtung 40 angeordnet ist.

Die Schwingungsdämpfereinheit 10 umfasst eine Feder 22, die sich spiralförmig um einen Teil des Dämpfers 12 erstreckt. Zwischen dem Radträger 42 und der Feder 22 ist eine Fußpunktverstelleinrichtung 24 angeordnet. Die Fußpunktverstelleinrichtung 24 umfasst einen ersten Verstellpartner 26, der ortsfest zum Dämpferrohr 16 angeordnet ist und am Radträger 42 anliegt, und einen zweiten Verstellpartner 28. Der zweite Verstellpartner 28 ist zwischen dem ersten Verstellpartner 26 und der Feder 22 angeordnet und relativ zum ersten Verstellpartner 26 in eine zur Längsachse LA parallele Verstellrichtung VR beweglich gelagert. Der erste Verstellpartner 26 und der zweite Verstellpartner 28 sind mittels eines Rollbalgs 46 miteinander verbunden. Der Rollbalg 46 weist angrenzend an den ersten Verstellpartner 26 eine Rollfalte 52 auf. Die Verstellpartner 26, 28 und der Rollbalg 46 bilden einen Fluidraum 48 aus. Ein dem ersten Verstellpartner 26 zugewandtes Ende des zweiten Verstellpartners 28 ist durch ein Kraftaufnahmeelement 30 ausgebildet. Ein der Feder 22 zugewandtes Ende des zweiten Verstellpartners 28 ist durch ein Federanlageelement 36 ausgebildet.

Zwischen dem Federanlageelement 36 und dem Kraftaufnahmeelement 30 weist der zweite Verstellpartner 28 ein rohrförmiges Überbrückungselement 34 auf. Das Überbrückungselement 34 hat eine von der Längsachse LA abgewandte Außenfläche A1, die einen ersten Abstand S1 von der Längsachse LA hat. Der erste Abstand S1 ist geringer als ein zweiter Abstand S2 einer von der Längsachse LA abgewandten Außenfläche A2 des Kraftaufnahmeelementes 30 von der Längsachse LA. Die Abstände S1, S2 werden dabei jeweils in eine radiale Richtung RR gemessen.

Im Einzelnen ist das Überbrückungselement 34 so ausgebildet, dass seine Außenfläche A1 in einer ersten Hilfsfläche HF1 liegt. Die erste Hilfsfläche HF1 umgibt die Längsachse LA mit dem einheitlichen Abstand S1. Die erste Hilfsfläche HF1 schneidet das Kraftaufnahmeelement 30 vollumfänglich. Eine in die Verstellrichtung VR gemessene Länge L1 des Überbrückungselementes 34 ist größer als ein Dreifaches des zweiten Abstandes S2.

Die Feder 22 liegt einerseits an einer ersten Federanlagefläche 20 des Gegenlagers 18 an. Andererseits liegt die Feder 22 an einer zweiten Federanlagefläche 32 des Federanlageelementes 36 an. Durch eine Bewegung des zweiten Verstellpartners 28 in die Verstellrichtung VR lässt sich also eine Vorspannung der Feder 22 variieren.

Über die Schwingungsdämpfereinheit 10 hinaus weist die Fahrwerkseinrichtung 40 den Radträger 42, eine nicht dargestellte Radnabe, die um eine Drehachse DA drehbar am Radträger 42 gelagert ist, und ein an der Radnabe angeordnetes Rad auf. Das Rad umfasst einen sich rotationssymmetrisch um die Drehachse DA erstreckenden Felgenring 44, der als einziger Bestandteil des Rades in den Fig. dargestellt ist.

Die Fußpunktverstelleinrichtung 24 ist teilweise innerhalb eines Felgeninnenraumes FR angeordnet. Der Felgeninnenraum FR erstreckt sich innerhalb des Felgenringes 44 und grenzt an eine Felgenseitenebene SE an, die rechtwinklig zur Drehachse DA ausgerichtet ist und den Felgenring 44 berührt.

Eine zweite Hilfsfläche HF2 hat einen einheitlichen Abstand von der Drehachse DA, der einem Abstand einer Außenfläche eines nicht dargestellten Reifens des Rades entspricht. Die Fußpunktverstelleinrichtung 24 ist derart angeordnet, dass das Federanlageelement 36 zumindest teilweise außerhalb eines Innenraumes der zweiten Hilfsfläche HF2 angeordnet ist. Ferner ist die Fußpunktverstelleinrichtung 24 derart angeordnet, dass eine zur Längsachse LA parallele Hilfsgerade HG, die das Kraftaufnahmeelement 30 berührt, den Felgenring 44, insbesondere im Bereich des Felgenhorns, schneidet.

Sowohl gemäß Fig. 1 als auch gemäß Fig. 2 ist der zweite Verstellpartner 28 mittels zwei Axialführungsringen 38 gelagert. Ein oberer der Axialführungsringe 38 ist jeweils im Bereich des Federanlageelementes 36 zwischen dem zweiten Verstellpartner 28 und dem Dämpferrohr 16 angeordnet. Ein zweiter Axialführungsring 38 ist gemäß Fig. 1 zwischen dem zweiten Verstellpartner 28 und dem ersten Verstellpartner 26 und gemäß Fig. 2 zwischen dem zweiten Verstellpartner 28 und dem Dämpferrohr 16 angeordnet.

### Bezugszeichenliste

- 10: Schwingungsdämpfereinheit
- 12: Dämpfer
- 14: Dämpferstange
- 16: Dämpferrohr
- 18: Gegenlager
- 20: Erste Federanlagefläche
- 22: Feder
- 24: Fußpunktverstelleinrichtung
- 26: Erster Verstellpartner
- 28: Zweiter Verstellpartner
- 30: Kraftaufnahmeelement
- 32: Zweite Federanlagefläche
- 34: Überbrückungselement
- 36: Federanlageelement
- 38: Axialführungsring
- 40: Fahrwerkseinrichtung
- 42: Radträger
- 44: Felgenring
- 46: Rollbalg
- 48: Fluidraum
- 50: Fahrzeugstruktur
- 52: Rollfalte

- A1: Außenfläche des Überbrückungselementes
- A2: Außenfläche des Kraftaufnahmeelementes
- DA: Drehachse
- FR: Felgenraum
- HF1: Erste Hilfsfläche
- HF2: Zweite Hilfsfläche
- HG: Hilfsgerade
- LA: Längsachse
- RR: Radiale Richtung
- S1: Erste Strecke
- S2: Zweite Strecke
- SE: Felgenseitenebene
- VR: Verstellrichtung

## Patentansprüche

1. Schwingungsdämpfereinheit (10), durch die sich eine Längsachse (LA) erstreckt, umfassend einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt,
**dadurch gekennzeichnet, dass**
der zweite Verstellpartner (28) zwischen der zweiten Federanlagefläche (32) und dem Kraftaufnahmeelement (30) ein Überbrückungselement (34) umfasst, das eine von der Längsachse (LA) abgewandte Außenfläche (A1) aufweist, die zumindest bereichsweise einen ersten Abstand (S1) von der Längsachse (LA) hat, der geringer ist als ein zweiter Abstand (S2) zumindest eines Bereiches einer von der Längsachse (LA) abgewandten Außenfläche (A2) des Kraftaufnahmeelementes (30) und/oder des ersten Verstellpartners (26) von der Längsachse (LA).

2. Schwingungsdämpfereinheit nach Anspruch 1, **dadurch gekennzeichnet, dass** eine erste Hilfsfläche (HF1), die die Längsachse (LA) in einheitlichem Abstand (S1) umgibt und innerhalb derer das Überbrückungselement (34) angeordnet ist, das Kraftaufnahmeelement (30) und/oder den ersten Verstellpartner (26) schneidet.

3. Schwingungsdämpfereinheit nach einem der vorhergehenden Ansprüche, **dadurch gekennzeichnet, dass** eine in die Verstellrichtung (VR) gemessene Länge (L1) des Überbrückungselementes (34) größer ist als der zweite Abstand (S2), bevorzugt größer ist als ein Zweifaches des zweiten Abstandes (S2), besonders bevorzugt größer ist als ein Dreifaches des zweiten Abstandes (S2).

4. Schwingungsdämpfereinheit nach einem der vorhergehenden Ansprüche, **dadurch gekennzeichnet, dass** das Überbrückungselement (34) rohrförmig ausgebildet ist.

5. Schwingungsdämpfereinheit nach einem der vorhergehenden Ansprüche, **gekennzeichnet durch** eine derartige Ausbildung des Überbrückungselementes (34), dass der erste Abstand (S1) höchstens 70 %, bevorzugt höchstens 50 % des zweiten Abstandes (S2) entspricht.

6. Schwingungsdämpfereinheit nach einem der vorhergehenden Ansprüche, **dadurch gekennzeichnet, dass** der zweite Verstellpartner (28) zwischen dem Überbrückungselement (34) und der Feder (22) ein radial vom Überbrückungselement (34) abstehendes Federanlageelement (36) aufweist, das die zweite Federanlagefläche (32) aufweist.

7. Schwingungsdämpfereinheit nach einem der vorhergehenden Ansprüche, **dadurch gekennzeichnet, dass** zwischen dem zweiten Verstellpartner (28) und dem Dämpfer (12) zumindest zwei in die Verstellrichtung (VR) zueinander versetzt positionierte Axialführungsringe (38) angeordnet sind.

8. Schwingungsdämpfereinheit nach Anspruch 7, **dadurch gekennzeichnet, dass** zumindest einer der Axialführungsringe (38) zwischen dem ersten Verstellpartner (26) und dem zweiten Verstellpartner (28) angeordnet ist.

9. Fahrwerkseinrichtung (40) aufweisend einen Radträger (42), eine Radnabe, die um eine Drehachse (DA) drehbar am Radträger (42) gelagert ist, ein an der Radnabe angeordnetes Rad mit einer einen sich rotationssymmetrisch um die Drehachse (DA) erstreckenden Felgenring (44) aufweisenden Radfelge und eine Schwingungsdämpfereinheit (10), durch die sich eine Längsachse (LA) erstreckt und die einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt, umfasst, wobei ein vom Gegenlager (18) abgewandtes Ende des Dämpfers (12) am Radträger (42) angeordnet ist,
**dadurch gekennzeichnet, dass**
die Fußpunktverstelleinrichtung (24) zumindest teilweise innerhalb eines Felgeninnenraumes (FR) angeordnet ist, der sich innerhalb des Felgenringes (44) und angrenzend an eine Felgenseitenebene (SE) erstreckt, die rechtwinklig zur Drehachse (DA) ausgerichtet ist und den Felgenring (44) berührt.

10. Fahrwerkseinrichtung nach Anspruch 9, **dadurch gekennzeichnet, dass** die Schwingungsdämpfereinheit (10) nach einem der Ansprüche 1 bis 8 ausgebildet ist.

11. Fahrwerkseinrichtung nach Anspruch 10, **dadurch gekennzeichnet, dass** das Überbrückungselement (34) näher an die Drehachse (DA) heranreicht, als der Felgenring (44) von der Drehachse (DA) beabstandet ist.

12. Fahrwerkseinrichtung nach einem der Ansprüche 9 bis 11, **dadurch gekennzeichnet, dass** die Fußpunktverstelleinrichtung (24) derart teilweise innerhalb des Felgeninnenraumes (FR) angeordnet ist, dass in einem Längsschnitt entlang einer Längsebene, in der die Längsachse (LA) liegt, eine zur Längsachse (LA) parallele Hilfsgerade (HG), die das Kraftaufnahmeelement (30) und/oder den ersten Verstellpartner (26) berührt, den Felgenring (44) schneidet.

13. Fahrwerkseinrichtung nach einem der vorhergehenden Ansprüche, **dadurch gekennzeichnet, dass** die Fußpunktverstelleinrichtung (24) zwischen dem ersten Verstellpartner (26) und dem zweiten Verstellparter (28) einen größenvariablen Fluidraum (48) ausbildet.

14. Fahrwerkseinrichtung nach Anspruch 13, **dadurch gekennzeichnet, dass** die Fußpunktverstelleinrichtung (24) zur Ausbildung des Fluidraums (48) zumindest einen Rollbalg (46) aufweist, der sich vom ersten Verstellpartner (26) zum zweiten Verstellpartner (28) erstreckt und mindestens eine Rollfalte (52) ausbildet.

## Geänderte Patentansprüche

### Geänderte Patentansprüche gemäss Regel 137(2) EPÜ.

1. Schwingungsdämpfereinheit (10), durch die sich eine Längsachse (LA) erstreckt, umfassend einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt, wobei der zweite Verstellpartner (28) zwischen der zweiten Federanlagefläche (32) und dem Kraftaufnahmeelement (30) ein Überbrückungselement (34) umfasst, das eine von der Längsachse (LA) abgewandte Außenfläche (A1) aufweist, die zumindest bereichsweise einen ersten Abstand (S1) von der Längsachse (LA) hat, der geringer ist als ein zweiter Abstand (S2) zumindest eines Bereiches einer von der Längsachse (LA) abgewandten Außenfläche (A2) des Kraftaufnahmeelementes (30) und/oder des ersten Verstellpartners (26) von der Längsachse (LA),
**gekennzeichnet durch** eine derartige Ausbildung des Überbrückungselementes (34), dass der erste Abstand (S1) höchstens 70 % des zweiten Abstandes (S2) entspricht.

2. Schwingungsdämpfereinheit (10), durch die sich eine Längsachse (LA) erstreckt, umfassend einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt, wobei der zweite Verstellpartner (28) zwischen der zweiten Federanlagefläche (32) und dem Kraftaufnahmeelement (30) ein Überbrückungselement (34) umfasst, das eine von der Längsachse (LA) abgewandte Außenfläche (A1) aufweist, die zumindest bereichsweise einen ersten Abstand (S1) von der Längsachse (LA) hat, der geringer ist als ein zweiter Abstand (S2) zumindest eines Bereiches einer von der Längsachse (LA) abgewandten Außenfläche (A2) des Kraftaufnahmeelementes (30) und/oder des ersten Verstellpartners (26) von der Längsachse (LA),
**dadurch gekennzeichnet, dass** eine in die Verstellrichtung (VR) gemessene Länge (L1) des Überbrückungselementes (34) größer ist als ein Dreifaches des zweiten Abstandes (S2).

3. Schwingungsdämpfereinheit nach Anspruch 1 oder 2, **dadurch gekennzeichnet, dass** eine erste Hilfsfläche (HF1), die die Längsachse (LA) in einheitlichem Abstand (S1) umgibt und innerhalb derer das Überbrückungselement (34) angeordnet ist, das Kraftaufnahmeelement (30) und/oder den ersten Verstellpartner (26) schneidet.

4. Schwingungsdämpfereinheit nach einem der vorhergehenden Ansprüche, **dadurch gekennzeichnet, dass** das Überbrückungselement (34) rohrförmig ausgebildet ist.

5. Schwingungsdämpfereinheit nach einem der vorhergehenden Ansprüche, **gekennzeichnet durch** eine derartige Ausbildung des Überbrückungselementes (34), dass der erste Abstand (S1) höchstens 50 % des zweiten Abstandes (S2) entspricht.

6. Schwingungsdämpfereinheit nach einem der vorhergehenden Ansprüche, **dadurch gekennzeichnet, dass** der zweite Verstellpartner (28) zwischen dem Überbrückungselement (34) und der Feder (22) ein radial vom Überbrückungselement (34) abstehendes Federanlageelement (36) aufweist, das die zweite Federanlagefläche (32) aufweist.

7. Schwingungsdämpfereinheit nach einem der vorhergehenden Ansprüche, **dadurch gekennzeichnet, dass** zwischen dem zweiten Verstellpartner (28) und dem Dämpfer (12) zumindest zwei in die Verstellrichtung (VR) zueinander versetzt positionierte Axialführungsringe (38) angeordnet sind.

8. Schwingungsdämpfereinheit nach Anspruch 7, **dadurch gekennzeichnet, dass** zumindest einer der Axialführungsringe (38) zwischen dem ersten Verstellpartner (26) und dem zweiten Verstellpartner (28) angeordnet ist.

9. Fahrwerkseinrichtung (40) aufweisend einen Radträger (42), eine Radnabe, die um eine Drehachse (DA) drehbar am Radträger (42) gelagert ist, ein an der Radnabe angeordnetes Rad mit einer einen sich rotationssymmetrisch um die Drehachse (DA) erstreckenden Felgenring (44) aufweisenden Radfelge und eine Schwingungsdämpfereinheit (10), durch die sich eine Längsachse (LA) erstreckt und die einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt, umfasst, wobei ein vom Gegenlager (18) abgewandtes Ende des Dämpfers (12) am Radträger (42) angeordnet ist,
**dadurch gekennzeichnet, dass**
die Fußpunktverstelleinrichtung (24) zumindest teilweise innerhalb eines Felgeninnenraumes (FR) angeordnet ist, der sich innerhalb des Felgenringes (44) und angrenzend an eine Felgenseitenebene (SE) erstreckt, die rechtwinklig zur Drehachse (DA) ausgerichtet ist und den Felgenring (44) berührt, wobei die Schwingungsdämpfereinheit (10) nach Anspruch 1 ausgebildet ist.

10. Fahrwerkseinrichtung (40) aufweisend einen Radträger (42), eine Radnabe, die um eine Drehachse (DA) drehbar am Radträger (42) gelagert ist, ein an der Radnabe angeordnetes Rad mit einer einen sich rotationssymmetrisch um die Drehachse (DA) erstreckenden Felgenring (44) aufweisenden Radfelge und eine Schwingungsdämpfereinheit (10), durch die sich eine Längsachse (LA) erstreckt und die einen Dämpfer (12), ein Gegenlager (18), das eine erste Federanlagefläche (20) ausbildet, eine Feder (22), die an der ersten Federanlagefläche (20) anliegt, eine Fußpunktverstelleinrichtung (24), die entlang der Längsachse (LA) versetzt zum Gegenlager (18) angeordnet ist und einen ersten Verstellpartner (26) und einen zweiten Verstellpartner (28) aufweist, der entlang der Längsachse (LA) zumindest teilweise zwischen dem ersten Verstellpartner (26) und der Feder (22) angeordnet ist und relativ zum ersten Verstellpartner (26) in eine zur Längsachse (LA) parallele Verstellrichtung (VR) beweglich gelagert ist, ein Kraftaufnahmeelement (30) zur Aufnahme einer Verstellkraft aufweist und eine zweite Federanlagefläche (32) ausbildet, an der die Feder (22) anliegt, umfasst, wobei ein vom Gegenlager (18) abgewandtes Ende des Dämpfers (12) am Radträger (42) angeordnet ist,
**dadurch gekennzeichnet, dass**
die Fußpunktverstelleinrichtung (24) zumindest teilweise innerhalb eines Felgeninnenraumes (FR) angeordnet ist, der sich innerhalb des Felgenringes (44) und angrenzend an eine Felgenseitenebene (SE) erstreckt, die rechtwinklig zur Drehachse (DA) ausgerichtet ist und den Felgenring (44) berührt, wobei die Schwingungsdämpfereinheit (10) nach Anspruch 2 ausgebildet ist.

11. Fahrwerkseinrichtung nach Anspruch 9 oder 10, **dadurch gekennzeichnet, dass** das Überbrückungselement (34) näher an die Drehachse (DA) heranreicht, als der Felgenring (44) von der Drehachse (DA) beabstandet ist.

12. Fahrwerkseinrichtung nach einem der Ansprüche 9 bis 11, **dadurch gekennzeichnet, dass** die Fußpunktverstelleinrichtung (24) derart teilweise innerhalb des Felgeninnenraumes (FR) angeordnet ist, dass in einem Längsschnitt entlang einer Längsebene, in der die Längsachse (LA) liegt, eine zur Längsachse (LA) parallele Hilfsgerade (HG), die das Kraftaufnahmeelement (30) und/oder den ersten Verstellpartner (26) berührt, den Felgenring (44) schneidet.

13. Fahrwerkseinrichtung nach einem der Ansprüche 9 bis 12, **dadurch gekennzeichnet, dass** die Fußpunktverstelleinrichtung (24) zwischen dem ersten Verstellpartner (26) und dem zweiten Verstellparter (28) einen größenvariablen Fluidraum (48) ausbildet.

14. Fahrwerkseinrichtung nach Anspruch 13, **dadurch gekennzeichnet, dass** die Fußpunktverstelleinrichtung (24) zur Ausbildung des Fluidraums (48) zumindest einen Rollbalg (46) aufweist, der sich vom ersten Verstellpartner (26) zum zweiten Verstellpartner (28) erstreckt und mindestens eine Rollfalte (52) ausbildet.
